# DEMANDE DE BREVET EUROPEEN

(11) **EP 1 300 934 A1**
(43) Date de publication de la demande: **09.04.2003**
(21) Numéro de dépôt: 01870214.2
(22) Date de dépôt: 05.10.2001
(51) Int. Cl.: H02M 3/158

(54) **Procédé et dispositif de transformation d'une tension continue, et utilisation du dispositif**

(71) Demandeur: Constructions Electroniques + Telecommunications, en abrégé "C.E.+T", 4020 Liège (Wandre) (BE)
(72) Inventeur: Frebel, Fabrice, 4020 Wandre (BE); Bleus, Paul, 4020 Jupille (BE)
(74) Mandataire: Claeys, Pierre

(57) **Abrégé**

Procédé et dispositif de transformation d'une tension continue de départ (V1) en une autre tension continue (V2), notamment pour que l'autre tension continue vaille le double de la tension continue de départ, le procédé comprenant un choix d'un autotransformateur (1) comportant des première et seconde bornes extrêmes (2, 3) et une borne intermédiaire (4), un branchement d'un pôle (6) d'une source (7) de la tension continue de départ à la borne intermédiaire, un agencement d'un point commun (8) relié par chaque fois une diode distincte (9, 10), et/ou un commutateur auxiliaire (AH, BH) distinct respectif à chacune des deux bornes extrêmes, un branchement de l'autre pôle de tension continue de départ, d'une manière alternée et successive, à chacune des première et seconde bornes extrêmes prises séparément, le cas échéant, simultanément à ce branchement alterné, un actionnement alterné de chaque commutateur auxiliaire (AH, BH) pour que l'un soit passant et l'autre bloquant lors du branchement de l'autre pôle (12) à la seconde borne extrême (3) et pour que l'un soit bloquant et l'autre passant lors du branchement de l'autre pôle à la première borne extrême (2), et une collecte de l'autre tension continue (V2) entre ledit autre pôle et le point commun; et utilisation d'une forme particulière du dispositif.

## Description

La présente invention se rapporte à un procédé de transformation d'une tension continue de départ en une autre tension continue, notamment pour que l'autre tension continue vaille le double de la tension continue de départ.

De nombreux appareils électriques et électroniques, portables ou non, sont présentement alimentés à partir de sources de courant continu de préférence à des sources de courant alternatif, pour les motifs que l'homme de métier connaît.

Il y a de ce fait, et en conséquence, un besoin grandissant en procédés, dispositifs et/ou moyens simples et fiables de transformation d'un courant continu débité sous une tension continue déterminée de départ en un courant continu différent débité sous une tension continue d'une autre valeur. Cette transformation doit être faite avec un rendement parmi les meilleurs pour éviter entre autres une consommation inutile de courant se transformant en pertes calorifiques qu'il faut évacuer, pour réduire le poids du matériel mis en oeuvre, pour simplifier ce matériel et réduire par cela les risques de pannes. Des exemples de besoins de ce genre, qui constituent le but de la présente invention seront donnés ci-dessous mais les cas les plus typiques sont des doubleurs et/ou diviseurs de tension continue.

A cet effet, la présente invention propose d'abord un procédé comprenant un choix d'un autotransformateur, ou montage semblable, qui comporte en son bobinage des première et seconde bornes extrêmes et une borne intermédiaire. Il est fait un branchement d'un pôle d'une source de la tension continue de départ à la borne intermédiaire, et un agencement d'un point commun relié par chaque fois une diode distincte, et/ou un commutateur auxiliaire distinct respectif, à chacune des deux bornes extrêmes. Il est fait ensuite un branchement de l'autre pôle de la source de tension continue de départ, d'une manière alternée et successive, à chacune des première et seconde bornes extrêmes prises séparément, et une collecte de l'autre tension continue entre ledit autre pôle et le point commun.

La variante avec les commutateurs auxiliaires sera expliquée ci-après.

Le procédé suivant l'invention peut comporter un lissage de l'autre tension continue par la disposition d'une bobine, suivant les explications ci-dessous.

L'invention concerne aussi un dispositif de transformation d'une tension continue de départ en une autre tension continue, destiné notamment à la mise en oeuvre du procédé précité.

Pour atteindre le but à la base de l'invention, le dispositif comprend un autotransformateur, ou montage semblable, comportant des première et seconde bornes extrêmes et une borne intermédiaire, agencées pour être reliées directement ou indirectement à deux pôles d'une source de tension continue de départ. Il est agencé à cet effet une liaison d'un des pôles de la source à la borne intermédiaire. Un premier commutateur d'alternance est disposé entre l'autre pôle de la source et la première borne extrême et un second commutateur d'alternance est disposé entre l'autre pôle de la source et la seconde borne extrême. Une diode distincte et/ou un commutateur auxiliaire distinct sont/est monté(s) entre chacune des deux bornes extrêmes et un point commun. Un moyen de commande des deux commutateurs d'alternance, et le cas échéant des deux commutateurs auxiliaires, leur est raccordé et est agencé pour rendre alternativement passant l'un des deux commutateurs d'alternance et simultanément l'autre bloquant et vice versa. L'autre tension continue est alors disponible entre ledit autre pôle et le point commun qui forment une sortie de courant du dispositif. Les deux commutateurs auxiliaires éventuels sont auxiliaires également pour que l'un soit passant alors que l'autre est bloquant, et vice versa, en rapport avec la commande des deux commutateurs d'alternance.

Suivant une forme de réalisation de l'invention, le dispositif de l'invention peut comporter chaque fois un commutateur auxiliaire précité disposé en parallèle avec chaque fois une des deux diodes qui relient une borne extrême respective au point commun.

L'invention concerne encore une utilisation particulière du dispositif précité, suivant sa forme de réalisation préférée.

Dans cette utilisation, on alimente ledit dispositif par ladite sortie de courant et à cet effet on applique une tension continue entre ledit autre pôle et, selon le cas, le point commun ou une connexion d'une bobine de lissage dont l'autre connexion est reliée au point commun. On organise, d'une part, une paire de commutateurs comportant ledit premier commutateur d'alternance, disposé entre l'autre pôle de la source et la première borne extrême, et le commutateur auxiliaire qui relie cette même borne et le point commun. On organise, d'autre part, une autre paire de commutateurs comportant ledit second commutateur d'alternance, disposé entre l'autre pôle de la source et la seconde borne extrême, et le commutateur auxiliaire qui relie cette borne extrême au point commun. On programme le moyen de commande des commutateurs pour rendre, en alternance, passants les commutateurs d'une paire et simultanément bloquants les commutateurs de l'autre paire et vice versa, et on collecte entre les deux pôles précités une tension continue de source de départ pour alimenter un autre dispositif.

D'autres détails et particularités de l'invention ressortiront des revendications secondaires et de la description des dessins qui sont annexés au présent mémoire et qui illustrent, à titre d'exemples non limitatifs, le procédé, des formes de réalisation particulières du dispositif et l'utilisation suivant l'invention.
- La figure 1: montre une première variante d'un schéma de connexion mettant en oeuvre l'invention.
- La figure 2: montre une seconde variante du schéma de connexion mettant en oeuvre l'invention.
- La figure 3: montre une troisième variante du schéma de connexion, permettant une double utilisation, dont celle particulière susdite.
- La figure 4: représente dans le temps t des niveaux d'impulsions de commande des commutateurs, des niveaux de courants passant à travers ces commutateurs et des niveaux de courant d'entrée et de sortie.
- La figure 5: représente une utilisation d'un dispositif de l'invention en tant que diviseur de tension pour alimenter un onduleur.
- La figure 6: représente une utilisation d'un dispositif de l'invention en tant que multiplicateur de tension pour alimenter le même onduleur.
- La figure 7: représente dans le temps t, et dans deux réglages différents, des niveaux d'impulsions de commande des commutateurs et des niveaux de tensions obtenues.
- La figure 8: montre une variante du schéma de connexion de la figure 3 pour sa mise en oeuvre suivant l'utilisation particulière précitée.

Dans les différentes figures, les mêmes notations de référence désignent des éléments identiques ou analogues.

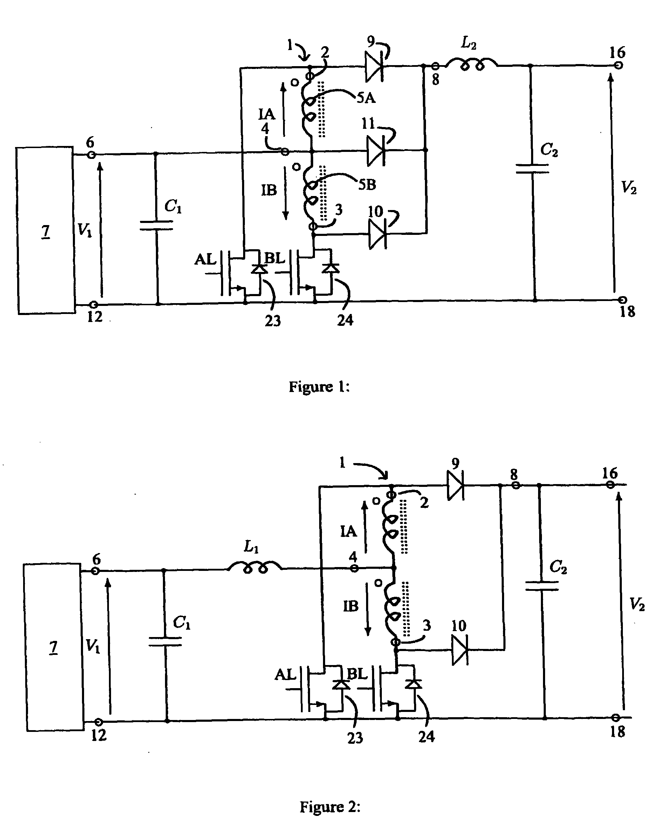

Le procédé de l'invention pour la transformation (figure 1) d'une tension continue de départ V1 en une autre tension continue V2 comprend un choix d'un autotransformateur 1 comportant une première borne extrême 2, une seconde borne extrême 3 et une borne intermédiaire 4. Cela détermine dans cet autotransformateur 1 deux bobinages 5A et 5B qui sont branchés l'un entre la borne extrême 2 et la borne intermédiaire 4 et l'autre entre la borne intermédiaire 4 et l'autre borne extrême 3 et qui sont avantageusement égaux, de manière à pouvoir réaliser un montage symétrique décrit ci-après.

On branche à la borne intermédiaire 4 un pôle 6 d'une source 7, non représentée mais qui peut être de tout type connu, qui fournit la tension continue de départ V1.

On constitue un point commun 8 que l'on relie respectivement (figure 2) par une diode 9 à la borne extrême 2, par une diode 10 à la borne extrême 3 et éventuellement (figure 1) par une diode 11 à la borne intermédiaire 4.

On branche l'autre pôle 12 de la source de tension continue 7, d'une manière alternée et successivement à chacune des première et seconde bornes extrêmes 2 et 3 prises séparément, et on collecte l'autre tension V2 entre ledit autre pôle 12 et le point commun 8.

L'autotransformateur 1 peut comporter en fait plusieurs bornes extrêmes 2 et 3 (non représentées) disposées symétriquement par rapport à la borne intermédiaire 4 sur les deux bobinages 5A et 5B, de manière à ce que l'on puisse raccorder l'autotransformateur 1 à différentes tensions continues V1 en fonction de la source 7 raccordée, et délivrer une tension continue V2 en rapport à cette tension V1 et à un appareil utilisant la tension V2.

Tout autre appareil à induction qui procure un même fonctionnement que l'autotransformateur 1 et qui est utilisé à la place de celui-ci doit être considéré comme étant son équivalent technique.

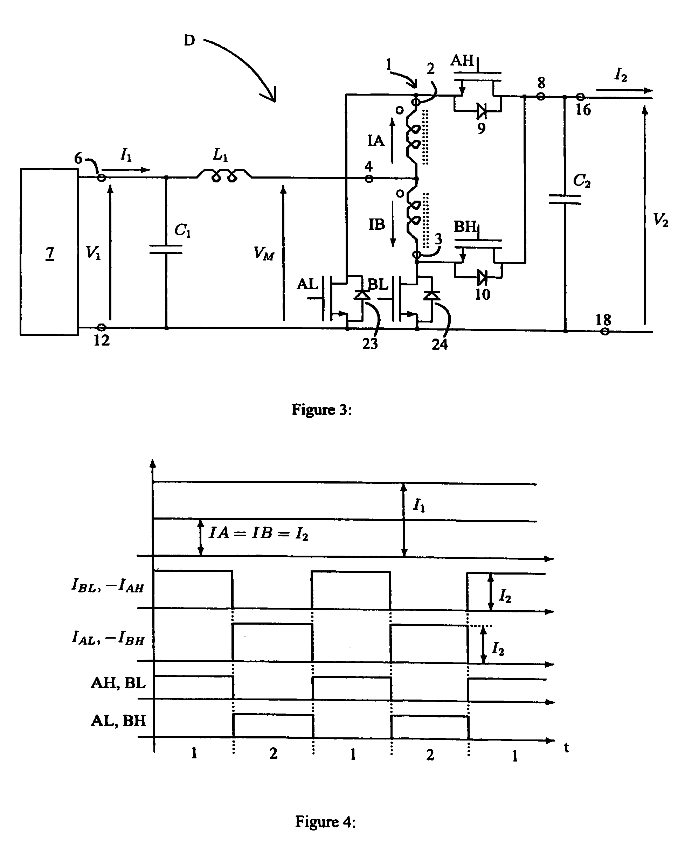

Dans une variante du procédé de l'invention, le point commun 8 est relié plutôt (figure 3) par un commutateur auxiliaire AH, BH distinct respectif à chacune des deux bornes 2, 3. Dans ce cas, lorsqu'on branche de manière alternée et successive :
- l'autre pôle 12 à la seconde borne extrême 3, on rend passant le commutateur auxiliaire AH et bloquant l'autre commutateur auxiliaire BH et
- l'autre pôle 12 à la première borne extrême 2, on rend bloquant le commutateur auxiliaire AH et passant l'autre commutateur auxiliaire BH.

A nouveau alors, l'autre tension continue V2 est collectée entre l'autre pôle 12 et le point commun 8.

Comme le montre la figure 3, une diode 9 précitée peut être branchée en parallèle au commutateur auxiliaire AH et une diode 10 peut être branchée en parallèle à l'autre commutateur auxiliaire BH, pour les motifs d'absorber des pointes de tension comme cela est connu dans le métier.

Avantageusement, on effectue un lissage de l'autre tension continue V2 par la disposition
- soit d'une bobine L2 (figure 1) entre le point commun 8 et une borne 16 d'un appareil (non représenté) utilisant l'autre tension continue V2,
- soit d'une bobine L1 (figure 2) entre la borne intermédiaire 4 et le pôle 6 associé de la source 7 de tension continue de départ,
- soit d'une bobine (non représentée) disposée dans la liaison entre le pôle 12 de la source de tension continue 7 et l'autre borne 18 de l'appareil utilisant l'autre tension V2.

Une combinaison de deux ou des trois bobines de lissage est aussi possible.

Pour mettre en oeuvre le procédé ci-dessus, il est proposé, suivant l'invention (figure 1 ou 2), un dispositif comprenant l'autotransformateur 1, ou un montage semblable tel que défini ci-dessus, qui comporte les première et seconde bornes extrêmes 2 et 3. La borne intermédiaire 4 précitée est reliée directement ou indirectement au pôle 6 de la source 7.

Un premier commutateur d'alternance AL est disposé entre l'autre pôle 12 de la source 7 et la première borne extrême 2. Un second commutateur d'alternance BL est disposé entre le même autre pôle 12 et la seconde borne extrême 3.

Comme indiqué ci-dessus, une diode 9, 10 respective est placée entre chacune des deux bornes extrêmes 2, 3 et un point commun 8.

Un moyen de commande non représenté mais connu dans le métier, tel qu'un microcontrôleur (microcontroller en anglais), est raccordé aux deux commutateurs d'alternance AL, BL et agencé pour rendre alternativement l'un passant et simultanément l'autre bloquant et vice versa.

L'autre tension continue V2 est disponible entre ledit autre pôle 12 et le point commun 8.

Les commutateurs d'alternance AL, BL sont avantageusement des transistors et en particulier du type MOSFET connu, pour suivre un rythme suffisant de commutation afin d'obtenir une tension continue V2 admissible par l'induction que provoque un bobinage 5A dans l'autre bobinage 5B et vice versa.

Deux diodes 23 et 24 peuvent être placées en parallèle respectivement avec le premier et le second commutateur d'alternance AL, BL. Dans un tel cas, ces commutateurs d'alternance AL, BL peuvent être du type IGBT également connu, dans lequel la diode 23, 24 est intégrée.

Comme le montre la figure 1, une diode auxiliaire 11 peut être disposée entre la borne intermédiaire 4 et le point commun 8. Cette diode 11 y a un rôle de "roue libre".

Le dispositif de l'invention peut comporter chaque fois, suivant la figure 3, un commutateur auxiliaire AH, BH qui remplace ou encore est disposé en parallèle avec chacune des deux diodes 9 et 10 respectives qui relient une borne extrême 2 ou respectivement 3 au point commun 8. Une explication de ce montage est donnée ci-après. Les commutateurs auxiliaires AH et BH peuvent être également avantageusement des transistors semblables à ceux mentionnés ci-dessus pour les commutateurs d'alternance AL et BL.

Les dessins schématisent à suffisance pour l'homme de métier la connexion des transistors et diodes mentionnés ainsi que des autres éléments qui composent le dispositif de l'invention dans ses variantes.

Une bobine de lissage L2 (figure 1), L1 (figures 2 et 3) ou autre peut être installée comme cela a déjà été expliqué ci-dessus ou comme l'homme de métier le connaît. Notamment dans le montage de la figure 1, des surtensions peuvent apparaître aux bornes des deux transistors AL et BL malgré la bobine L2, alors qu'avec la bobine L1 disposée suivant les figures 2 et 3, on obtient un blocage naturel du niveau de la tension aux bornes de ces mêmes transistors et la diode auxiliaire 11 n'est plus nécessaire.

Un condensateur C1, C2 peut être installé entre les deux pôles 6 et 12 de ladite source 7 et/ou entre ledit autre pôle 12 de celle-ci (ou la borne 18) et soit le point commun 8 soit, le cas échéant, à la borne 16 de l'appareil d'utilisation suivant la figure 1.

Un fonctionnement du dispositif suivant les figures 1 à 3 est expliqué en supposant qu'à la sortie de la source 7 le courant continu s'écoule du pôle 6 vers le pôle 12 de celle-ci.

Lors de chaque phase alternée pendant laquelle le commutateur d'alternance BL est passant et le commutateur d'alternance AL est bloquant, un courant IB s'écoule du pôle 6 par la borne intermédiaire 4, la bobine 5B, la borne extrême 3, vers le commutateur d'alternance BL et le pôle 12. Le courant IB dans la bobine 5B induit dans la bobine 5A un courant IA qui, en fonction du choix des sens d'enroulement réciproques des bobines 5A, 5B et de l'égalité de leurs autres paramètres, s'écoule en sens inverse dans la bobine 5A, de la borne 4 vers la borne 2, et y produit entre ces bornes 4 et 2 une tension qui est égale à celle V1 entre les pôles 6 et 12 et qui s'y ajoute. Le courant IA s'écoule alors du pôle 6 par la borne 4, la bobine 5A, la borne 2, la diode 9 et le point commun 8, jusqu'à la borne 16 de l'appareil d'utilisation, à travers celui-ci pour en sortir à sa borne 18 et revenir au pôle 12. La tension V2 obtenue aux bornes 16 et 18 de l'appareil d'utilisation vaut ainsi deux fois la tension V1 à la suite de cette addition. Le courant qui part du pôle 6 se divise en deux à la borne intermédiaire 4 : une moitié IB passe dans la bobine 5B et une moitié IA passe dans la bobine 5A. Le courant IA passant à travers l'appareil d'utilisation, par les bornes 16 et 18, est donc égal à la moitié du courant total qui quitte le pôle 6 et qui aboutit en retour au pôle 12.

Dans les mêmes conditions, lors de chaque phase alternée pendant lesquelles le commutateur d'alternance AL est passant et le commutateur d'alternance BL est bloquant, le courant s'écoule du pôle 6 par la borne intermédiaire 4, la bobine 5A, la borne extrême 2, vers le commutateur d'alternance AL et le pôle 12. Le courant IA dans la bobine 5A induit dans la bobine 5B un courant IB qui, en fonction du même choix des sens d'enroulement réciproques des bobines 5A, 5B et de l'égalité de leurs autres paramètres, s'écoule en sens inverse dans la bobine 5B, de la borne 4 vers la borne 3, et y produit entre ces bornes 4 et 3 une tension qui est égale à celle V1 entre les pôles 6 et 12 et qui s'y ajoute. Le courant IB s'écoule alors du pôle 6 par la borne 4, la bobine 5B, la borne 3, la diode 10 et le point commun 8, jusqu'à la borne 16 de l'appareil d'utilisation, à travers celui-ci pour en sortir à sa borne 18 et revenir au pôle 12. La tension V2 obtenue aux bornes 16 et 18 de l'appareil d'utilisation vaut ainsi encore deux fois la tension V1 à la suite de cette addition. Le courant I1 qui part du pôle 6 se divise donc à nouveau en deux à la borne intermédiaire 4 : une moitié IA passe dans la bobine 5A et une moitié IB passe dans la bobine 5B. Le courant IB passant à travers l'appareil d'utilisation, par les bornes 16 et 18, est donc égal à la moitié du courant total I1 qui quitte le pôle 6 et qui aboutit en retour au pôle 12, tandis que le courant 12 à la borne 16 de l'utilisation est formé par les impulsions successives alternées des courants IA et IB qui y sont égaux en grandeur et sens.

Dans le cas particulier de la figure 3, les commutateurs BL et AH sont réglés passants ensemble, lorsque les commutateurs AL et BH sont réglés bloquants, ensemble et vice versa de manière alternée.

La figure 4 montre dans le temps et de bas en haut, en rapport avec le schéma de la figure 3,
- les successions des impulsions alternées de passage et de blocage des paires de commutateurs AL et BH d'une part AH et BL d'autre part,
- les successions des impulsions de courants passants, dans ces paires de commutateurs
   IAL des bornes 2 à 12 avec
   IBH des bornes 8 à 3,
   et
   IBL des bornes 3 à 12 avec
   IAH des bornes 8 à 2,
   (les signes "-" à la figure 4 indiquent que les courants IBH et IAH circulent en sens inverse dans leurs commutateurs de la figure 3 au moment où ils sont passants), et
- plus haut dans la figure 4, les niveaux des courants 12 et 11.

Il doit être entendu que l'invention n'est nullement limitée aux formes de réalisation décrites et que bien des modifications peuvent être apportées à ces dernières sans sortir du cadre des revendications.

Ainsi une autre utilisation du dispositif suivant la figure 3 s'est avérée très avantageuse de manière surprenante. Non seulement ce dispositif peut travailler en multiplicateur, ou précisément en doubleur de tension, comme expliqué ci-dessus, mais aussi en diviseur de tension.

A cet effet, on peut alimenter ledit dispositif en y appliquant une tension continue V2 entre ledit autre pôle 12, notamment par l'intermédiaire de la borne18 et, selon le cas, le point commun 8 (tel que représenté à la figure 3) ou une connexion d'une bobine de lissage (non représentée à la figure 3) dont l'autre connexion est alors reliée audit point commun 8.

Dans cette autre utilisation, on organise alors une paire de commutateurs comportant ledit second commutateur d'alternance BL, disposé entre l'autre pôle 12 de la source 7 et la seconde borne extrême 3, et le commutateur auxiliaire AH qui relie la borne extrême 2 et le point commun 8. De même, une autre paire de commutateurs comporte ledit premier commutateur d'alternance AL, disposé entre l'autre pôle 12 de la source 7 et la première borne extrême 2, et le commutateur auxiliaire BH qui relie la borne extrême 3 au point commun 8.

On programme dans ce cas le moyen de commande précité des commutateurs pour rendre, simultanément et en alternance, passants les commutateurs d'une paire et bloquants les commutateurs de l'autre paire ci-dessus, et vice versa. On collecte aux pôles 6 et 12 précités une tension continue de source de départ pour alimenter un autre dispositif branché alors à ces pôles 6 et 12. L'homme de métier peut aisément inverser les explications données pour l'utilisation du dispositif de la figure 3 en tant que doubleur de tension afin de comprendre le présent fonctionnement en tant que diviseur de tension.

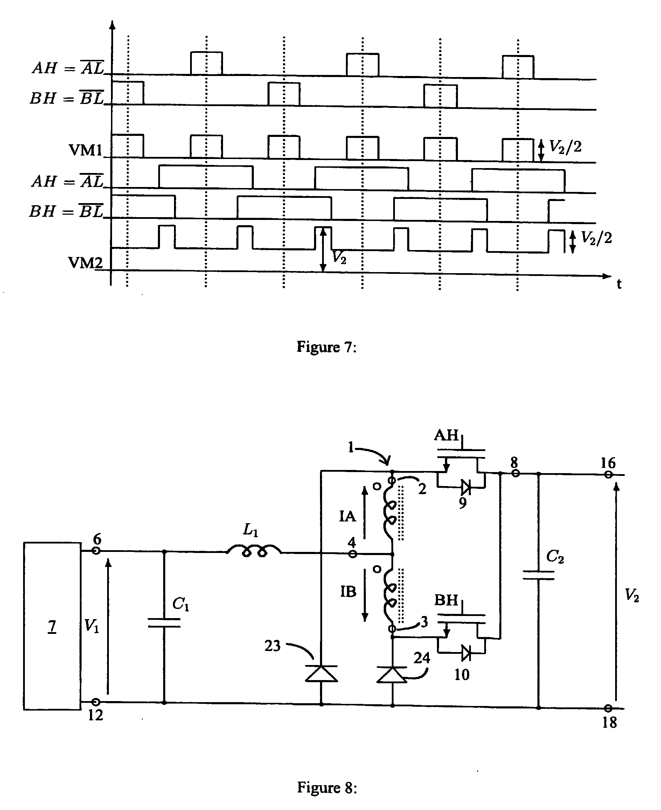

A l'examen de cette utilisation particulière de l'invention, il peut apparaître que, si les diodes 23 et 24 du schéma de la figure 3 sont correctement dimensionnées, les commutateurs d'alternance AL et BL qui leur sont parallèles peuvent être soit maintenus bloquants soit même être supprimés pour obtenir un schéma suivant la figure 8. Il suffit alors que le moyen de commande des commutateurs soit programmé pour rendre simultanément le commutateur auxiliaire AH passant et le commutateur BH bloquant et ensuite inversement le commutateur AH bloquant et le commutateur BH passant et ainsi de suite en alternance pour obtenir la tension réduite V1 aux pôles 6 et 12 à partir de la tension V2.

On constate une symétrie certaine entre la figure 2 d'un schéma de multiplicateur et la figure 8 d'une schéma de diviseur.

Comme le constatera l'homme de métier, une tension d'entrée (V1 ou V2) modulée donnera avec les circuits des figures 1, 2, 3 et 8 une tension de sortie (V2 ou respectivement V1) modulée. De même, une modulation du rapport cyclique permet de moduler une tension de sortie (V2 ou V1) pour une tension d'entrée (V1 ou respectivement V2) constante.

Pour mémoire, l'objectif du dispositif de l'invention, en particulier suivant la figure 3, n'est pas de réguler la tension de sortie ou autre tension V2 mais de doubler la valeur de la tension de départ V1 dans un sens ou, pris dans l'autre sens, de diviser la tension V2 par deux. Le rapport cyclique (duty cycle en anglais) des commutateurs est alors réglé pour être très près de 50 %, ce rapport cyclique étant le rapport entre le temps de conduction d'une paire de commutateurs de la figure 3 et une période de commutation totale.

Si l'on modifie ce rapport cyclique de conduction des commutateurs, on modifie le rapport de transformation du dispositif D de l'invention dans une plage de 0 à 2 dans un montage en multiplicateur et dans une plage de 0 à 0,5 lorsque le même dispositif D est utilisé en diviseur de tension.

Dans l'exposé ci-dessus, on ne tient pas compte du courant de magnétisation de l'autotransformateur 1 qui est considéré comme négligeable.

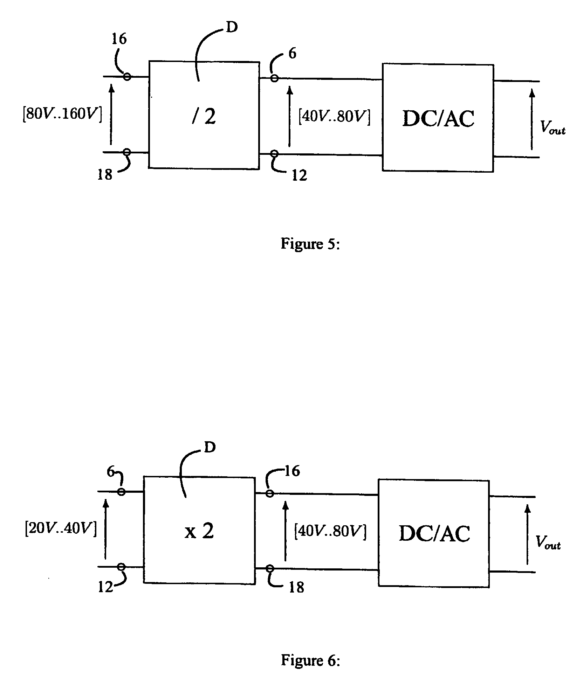

Les figures 5 et 6 montrent un exemple typique d'utilisation du dispositif D de l'invention qui alimente un même onduleur DC/AC à alimenter avec une tension continue entre 40 et 80 VDC.

Selon que le dispositif D construit suivant la figure 3 est branché dans un sens (figure 5) en diviseur ou dans l'autre sens (figure 6), en doubleur de tension, le même onduleur, donné à titre d'exemple peut être alimenté (figure 5) au départ d'une tension de 80 à 160 volts ou (figure 6) au départ d'une tension de 20 à 40 volts, par l'intermédiaire du même dispositif D, en inversant les entrée et sortie de celui-ci. Il est connu que pour un montage de ce genre il faut un rendement très élevé, égal ou supérieur à 97 %.

Parmi d'autres avantages obtenus grâce au dispositif de l'invention, outre celui qui vient d'être expliqué, il y a les suivants.

Les courants continus IA, IB qui circulent dans les bobinages 5A, 5B n'y provoquent pas l'effet pelliculaire connu dans les conducteurs de ceux-ci. En conséquence, les sections de leurs fils peuvent être réduites par rapport à un transformateur en courant haché de même puissance, grâce à cette meilleure utilisation des sections de fils.

Les bobinages 5A, 5B ne sont traversés que par les courants IA et IB et non par le courant total I1 et cela permet aussi de réduire les sections de leurs fils.

Les commutateurs à semi-conducteurs ne sont soumis eux aussi qu'aux courants IA et IB réduits, et non au courant total I1 et cela réduit énergiquement les pertes caloriques dans ces commutateurs, comme le sait l'homme de métier.

Lorsque le rapport cyclique de fonctionnement des commutateurs est de 0,5, les courants I1 et 12 sont pratiquement continus et cela permet de réduire les mesures et matériel nécessaires pour filtrer ces courants.

Le dispositif de l'invention donne une évolution symétrique des potentiels lors des commutations, aux bornes 2 et 3, et cela diminue considérablement le mode commun résultant (rayonnement électromagnétique réduit). Le niveau de bruit qui en résulte peut donc être très bas.

Ledit dispositif permet un fonctionnement en "Zero Voltage Switching" ou commutation sous tension nulle. Pour un dispositif de petite puissance, il suffit de tolérer un courant de magnétisation triangulaire dans l'autotransformateur 1. Pour de fortes puissances, une mise en parallèle déphasée de deux dispositifs identiques de l'invention permet d'atteindre une commutation douce en conservant des courants continus.

D'expérience de laboratoire, il s'avère que le rendement global d'un dispositif de l'invention est élevé et peut atteindre 98 %

II résulte des avantages cités qu'entre autre le facteur de dimensionnement de l'autotransformateur 1 peut être réduit de moitié pour des puissances élevées par rapport à un autotransformateur de même puissance, utilisé avec un courant haché.

Le dispositif D de la figure 3 peut être avantageusement utilisé en diviseur de tension pour obtenir de basses tensions (2,1 V, 3, 3 V, ...) avec un courant élevé, notamment pour l'alimentation de processeurs. Les courants traités par les commutateurs à semi-conducteurs n'étant aussi que de la moitié de la valeur du courant sortant, les pertes dans les commutateurs de type MOSFET entre autres sont réduites par quatre.

Le dispositif D de la figure 3 peut être aussi utilisé en diviseur de tension avec modulation (ou commande particulière) du cycle de fonctionnement des commutateurs.

La figure 7 montre à cet effet de haut en bas deux cas à réglages différents, en fonction du temps t.

Dans le haut de la figure 7, les commutateurs auxiliaires AH et BH reçoivent du moyen de commande des impulsions de commande passant/bloquant d'un type réduit. Les impulsions pour les commutateurs auxiliaires AH et BH sont déphasées de 180°. Les impulsions des commutateurs d'alternance AL et BL sont données de manière complémentaire à celles de AH et respectivement BH. Il en résulte une tension VM1, entre la borne intermédiaire 4 (voir VM, figure 3) et l'autre pôle 12, égale à V2/2 en pointe, avec une amplitude de V2/2 à partir d'une seuil constant à niveau 0.

Dans le bas de la figure 7, les mêmes commutateurs que ci-dessus reçoivent du moyen de commande des impulsions plus longues (cycle de fonctionnement plus important), dans un même ordre que ci-dessus. Il en résulte une tension VM2, entre les mêmes borne 4 et pôle 12 (voir VM, figure 3), égale à V2 en pointe, avec une amplitude de V2/2 à partir d'un seuil constant à un niveau V2/2.

Cette propriété de l'amplitude de la tension VM modulée est très intéressante; par exemple elle permet de réduire la taille d'une bobine de lissage dans un onduleur. Ce montage permet de réaliser très simplement un onduleur de niveaux multiples. Dans ce cas, la tension V1 n'est plus continue mais variable. La notion de tension continue telle qu'utilisée dans cette description doit être prise au sens très large du terme. Le mot "continu" est employé par opposition au mot "alternatif', les tensions V1 et V2 ne sont continues que si on les regarde sur une échelle de temps égale à celle de la période de commutation. Sur une échelle de temps plus large, ces tensions peuvent bien sûr varier.

## Revendications

1. Procédé de transformation d'une tension continue de départ (V1) en une autre tension continue (V2), notamment pour que l'autre tension continue (V2) vaille le double de la tension continue de départ (V1), le procédé étant **caractérisé en ce qu'**il comprend :
- un choix d'un autotransformateur (1), ou montage semblable, comportant des première et seconde bornes extrêmes (2, 3) et une borne intermédiaire (4),
- un branchement d'un pôle (6) d'une source (7) de la tension continue de départ (V1) à la borne intermédiaire (4),
- un agencement d'un point commun (8) relié par chaque fois une diode distincte (9, 10), et/ou un commutateur auxiliaire (AH, BH) distinct respectif à chacune des deux bornes extrêmes (2, 3),
- un branchement de l'autre pôle (12) de la source (7) de tension continue de départ (V1), d'une manière alternée et successive, à chacune des première et seconde bornes extrêmes (2, 3) prises séparément,
- le cas échéant, simultanément à ce branchement alterné, un actionnement alterné de chaque commutateur auxiliaire (AH, BH) pour que l'un (AH) soit passant et l'autre (BH) bloquant lors du branchement de l'autre pôle (12) à la seconde borne extrême (3) et pour que l'un (AH) soit bloquant et l'autre (BH) passant lors du branchement de l'autre pôle (12) à la première borne extrême (2), et
- une collecte de l'autre tension continue (V2) entre ledit autre pôle (12) et le point commun (8).

2. Procédé suivant la revendication 1, **caractérisé en ce qu'**il comporte un lissage de l'autre tension continue (V2) par la disposition d'une bobine (L2, L1) :
- soit entre le point commun (8) et une borne (16) d'un appareil d'utilisation de l'autre tension continue (V2),
- soit entre la borne intermédiaire (4) de l'autotransformateur (1) et le pôle (6) associé de la source (7) de tension continue de départ (V1),
- soit entre une borne (18) d'un appareil d'utilisation de l'autre tension continue (V2) et l'autre pôle (12) de la source (7) de tension continue de départ (V1) relié alternativement auxdites deux bornes extrêmes (2, 3).

3. Procédé suivant l'une ou l'autre des revendications 1 et 2, **caractérisé par** un branchement d'une diode (11) entre la borne intermédiaire (4) et le point commun (8).

4. Dispositif de transformation d'une tension continue de départ (V1) en une autre tension continue (V2), destiné notamment à la mise en oeuvre du procédé suivant l'une quelconque des revendications 1 à 3, le dispositif comprenant
- un autotransformateur (1), ou montage semblable, comportant des première et seconde bornes extrêmes (2, 3) et une borne intermédiaire (4), agencées pour être reliées à deux pôles (6, 12) d'une source (7) de tension continue de départ (V1),
- une liaison d'un des pôles (6) de la source (7) à la borne intermédiaire (4),
- un premier commutateur d'alternance (AL) disposé entre l'autre pôle (12) de la source (7) et la première borne extrême (2),
- un second commutateur d'alternance (BL) disposé entre l'autre pôle (12) de la source (7) et la seconde borne extrême (3),
- une diode distincte (9, 10) et/ou un commutateur auxiliaire distinct (AH, BH) entre chacune des deux bornes extrêmes (2, 3) et un point commun (8), et
- un moyen de commande des deux commutateurs d'alternance (AL, BL), agencé pour rendre alternativement l'un passant et simultanément l'autre bloquant et vice versa, et le cas échéant des deux commutateurs auxiliaires (AH, BH) pour qu'alternativement l'un soit passant pendant que l'autre est bloquant, et vice versa, en rapport avec la commande des deux commutateurs d'alternance (AL, BL),
- l'autre tension continue (V2) étant disponible entre ledit autre pôle (12) et le point commun (8).

5. Dispositif suivant la revendication 4, **caractérisé en ce qu'**il comporte chaque fois une diode (23, 24) en parallèle avec le premier et le second commutateur d'alternance (AL, BL).

6. Dispositif suivant l'une ou l'autre des revendications 4 et 5, **caractérisé en ce qu'**il comporte une diode auxiliaire (11) disposée entre la borne intermédiaire (4) et le point commun (8).

7. Dispositif suivant l'une ou l'autre des revendications 4 et 5, **caractérisé en ce que** chaque commutateur auxiliaire (AH, BH) est disposé respectivement en parallèle avec une des deux diodes (9, 10) qui relient une borne extrême (2, 3) au point commun (8).

8. Dispositif suivant l'une quelconque des revendications 4 à 7, **caractérisé en ce qu'**il comporte une bobine de lissage (L2, L1) :
- soit entre le point commun (8) et une borne (16) d'un appareil d'utilisation de l'autre tension continue (V2),
- soit entre la borne intermédiaire (4) de l'autotransformateur (1) et le pôle (6) associé de la source (7) de tension continue de départ (V1),
- soit entre une borne (18) d'un appareil d'utilisation de l'autre tension continue (V2) et l'autre pôle (12) de la source (7) de tension continue de départ (V1), qui est relié alternativement auxdites deux bornes extrêmes (2, 3).

9. Dispositif suivant l'une quelconque des revendications 4 à 8, **caractérisé en ce qu'**il comporte un condensateur (C1, C2) entre les deux pôles (6, 12) de ladite source (7) et/ou entre ledit autre pôle (12) de celle-ci et le point commun (8) ou, le cas échéant, une connexion d'une bobine de lissage (L2) dont l'autre connexion est reliée audit point commun (8).

10. Utilisation du dispositif suivant l'une quelconque des revendications 7 à 9, **caractérisée en ce que** :
- on alimente ledit dispositif en appliquant une tension continue (V2) entre ledit autre pôle (12) et, selon le cas, le point commun (8) ou une connexion d'une bobine de lissage (L2) dont l'autre connexion est reliée audit point commun (8),
- on organise
- une paire de commutateurs comportant ledit second commutateur d'alternance (BL), disposé entre l'autre pôle (12) de la source (7) et la seconde borne extrême (3), et le commutateur auxiliaire (AH) qui relie la première borne extrême (2) et le point commun (8), et
- une autre paire de commutateurs comportant ledit premier commutateur d'alternance (AL), disposé entre l'autre pôle (12) de la source (7) et la première borne extrême (2), et le commutateur auxiliaire (BH) qui relie la seconde borne extrême (3) au point commun (8),
- on programme le moyen de commande des commutateurs pour rendre, simultanément et en alternance, passants les commutateurs d'une paire et bloquants les commutateurs de l'autre paire et vice versa, et
- on collecte aux pôles (6, 12) précités une tension continue de source de départ (V1) pour alimenter un autre dispositif.

11. Utilisation du dispositif suivant l'une quelconque des revendications 7 à 9, **caractérisé en ce que** :
- on alimente ledit dispositif en appliquant une tension continue (V2) entre ledit pôle (12) et, selon le cas, le point commun (8) ou une connexion d'une bobine de lissage (L2) dont l'autre connexion est relié audit point commun (8),
- soit on supprime les deux commutateurs d'alternance (AL, BL) soit on les maintient bloquants,
- on programme le moyen de commande des commutateurs pour rendre, simultanément et en alternance, passant un commutateur auxiliaire (AH, BH) et bloquant l'autre commutateur auxiliaire (BH, AH) et vice versa, et
- on collecte aux pôles (6, 12) précités une tension continue de source de départ (V1) pour alimenter un autre dispositif.
